# FASCICULE DE BREVET EUROPEEN

(11) **EP 2 717 104 B1**
(45) Date de publication et mention de la délivrance du brevet: **29.07.2015**
(21) Numéro de dépôt: 12187215.4
(22) Date de dépôt: 04.10.2012
(51) Int. Cl.: G04B 19/32

(54) **Illumination d'un quantième**
Beleuchtung eines Datumsmechanismus
Date illumination

(43) Date de publication de la demande: 09.04.2014
(73) Titulaire: The Swatch Group Research and Development Ltd., 2074 Marin (CH)
(72) Inventeur: Willemin, Michel, 2515 Prêles (CH); Martin, Jean-Claude, 2037 Montmollin (CH); Tortora, Pierpasquale, 2000 Neuchâtel (CH)
(74) Mandataire: Giraud, Eric

(56) Documents cités:
- WO-A1-2005/045533
- FR-A- 1 114 341
- FR-A1- 2 011 614
- US-A- 3 851 460
- US-A1- 2005 018 545
- US-A1- 2011 164 475

## Description

### Domaine de l'invention

L'invention concerne un dispositif d'illumination d'au moins un indicateur d'affichage d'un appareil horloger ou scientifique, ledit indicateur étant incorporé dans un boîtier que comporte ledit dispositif sous un guichet que comporte également ledit dispositif, ledit dispositif comportant au moins une source lumineuse phosphorescente dans ledit boîtier, des moyens de collecte d'énergie lumineuse externe du milieu ambiant dudit boîtier vers ladite source lumineuse phosphorescente, et dans lequel dispositif est implanté un composant lumineux constitué, ou bien par ladite source lumineuse phosphorescente, ou bien par un relais lumineux relié à ladite source lumineuse phosphorescente par des moyens de transmission d'énergie lumineuse réémise par ladite source lumineuse phosphorescente, pour illuminer ledit indicateur, ou bien du côté opposé audit guichet par rapport audit indicateur, ou bien en périphérie dudit guichet.

L'invention concerne encore un appareil horloger ou scientifique, comportant un tel dispositif pour l'illumination d'au moins un indicateur d'affichage que comporte ledit appareil dans un boîtier sous un guichet.

L'invention concerne le domaine des appareils horlogers ou scientifiques, et plus particulièrement le domaine de l'horlogerie et des montres.

### Arrière-plan de l'invention

L'emploi, de nuit ou par faible visibilité, d'appareils horlogers ou scientifiques a toujours été malcommode. En horlogerie, le besoin de connaître l'heure dans l'obscurité a autrefois donné naissance aux montres à tact, ou encore aux montres à sonnerie à la demande, dont le coût ne permettait pas la généralisation. L'emploi de peintures radioactives, en particulier à base de radium, a permis une lecture nocturne commode, mais au détriment de la santé de l'utilisateur, et avec un aspect peu discret, de jour comme de nuit, souvent peu prisé par l'utilisateur. La miniaturisation des sources d'énergie électrique a ensuite permis l'implantation d'éclairages électriques, mais avec la contrainte d'échanges fréquents des piles ou batteries. Les mécanismes de charge d'un condensateur ou d'une batterie en utilisant des mouvements de certains composants d'une montre, comme sa masse oscillante, existent mais sont coûteux et consommateurs d'espace intérieur.

Le document US 2005/018545 A1 au nom de SEYR ERNEST (ETERNA), décrit un dispositif d'affichage pour montre avec une surface luminescente pour rétroéclairage d'un élément d'affichage (symboles alphanumériques), Ces symboles peuvent être montés dans une fenêtre d'un écran opaque, la surface luminescente couvre au moins une section partielle d'une surface de support arrangée derrière la fenêtre, les symboles alphanumériques de l'élément d'affichage comprennent un matériel opaque, et les symboles alphanumériques de l'élément d'affichage sont arrangés entre le cadran et la surface luminescente.

Le document US 3 851 460 A au nom de PIQUEREZ décrit une montre avec une glace comportant une gorge métallisée et remplie d'un matériau luminescent qui réfléchit la lumière de ce matériau luminescent vers le cadran dela montre.

Le document US 2011/164475 A1 au nom de WENZEL JAN (LANGE UHREN), décrit une montre avec une boîte en forme de pot, comportant un guichet orienté vers un utilisateur, avec un mouvement et des composants comportant des surfaces supérieures réceptrices de lumière disposés dans la boîte et découverts par une pièce découverte et laissant passer la lumière du côté de l'utilisateur, la lumière parvenant depuis l'extérieur auxdites surfaces réceptrices de lumière au travers de ladite pièce découverte, la pièce découverte est transparente aux rayons ultra-violets, et est opaque au moins pour le spectre de lumière visible.

Le document WO 2005/045533 au nom de A1 LANGE UHREN décrit un affichage de montre, un matériau luminescent est appliqué aux disques d'affichage, sur lequel des symboles d'affichage sont imprimés, ou bien qui entoure des symboles imprimés au préalable, de façon à former une surface luminescente qui rend les symboles visibles dans l'obscurité ou sous faible luminosité.

Le document FR 2 011 614 A1 au nom de HAMILTON WATCH CY décrit une montre avec des moyens d'information lumineux, visibles à travers un guichet, et comportant un faisceau de fibres optiques. Le boîtier de la montre peut porter une source d'éclairage, qui peut être une source radioactive.

### Résumé de l'invention

L'invention se propose de pallier les problèmes de l'art antérieur, et d'apporter une solution au problème de l'illumination d'un affichage en mode nuit, qu'il s'agisse d'un affichage de grandeurs horlogères, de grandeurs physiques mesurées par un capteur ou similaire, ou encore de données introduites dans un appareil.

A cet effet, l'invention concerne un dispositif d'illumination d'au moins un indicateur d'affichage d'un appareil horloger ou scientifique, ledit indicateur étant incorporé dans un boîtier que comporte ledit dispositif sous un guichet que comporte également ledit dispositif, ledit dispositif comportant au moins une source lumineuse phosphorescente dans ledit boîtier, des moyens de collecte d'énergie lumineuse externe du milieu ambiant dudit boîtier vers ladite source lumineuse phosphorescente, et dans lequel dispositif est implanté un composant lumineux constitué, ou bien par ladite source lumineuse phosphorescente, ou bien par un relais lumineux relié à ladite source lumineuse phosphorescente par des moyens de transmission d'énergie lumineuse réémise par ladite source lumineuse phosphorescente, pour illuminer ledit indicateur, ou bien du côté opposé audit guichet par rapport audit indicateur, ou bien en périphérie dudit guichet, caractérisé en ce que ledit dispositif comporte un cache interposable entre ledit composant lumineux et ledit indicateur entre une position d'occultation où ledit cache s'oppose au passage de la lumière entre ledit composant lumineux et ledit indicateur, et une position d'éclairage où ledit cache ne fait pas entrave au passage de la lumière, et un moyen de commande agencé pour mouvoir ledit cache, et en ce que ledit cache est en matériau opaque avec une fonction esthétique en mode jour, et favorisant le contraste dans la lecture dudit indicateur.

L'invention concerne encore un dispositif d'illumination d'au moins un indicateur d'affichage d'un appareil horloger ou scientifique, ledit indicateur étant incorporé dans un boîtier que comporte ledit dispositif sous un guichet que comporte également ledit dispositif, ledit dispositif comportant au moins une source lumineuse phosphorescente dans ledit boîtier, des moyens de collecte d'énergie lumineuse externe du milieu ambiant dudit boîtier vers ladite source lumineuse phosphorescente, et dans lequel dispositif est implanté un composant lumineux constitué, ou bien par ladite source lumineuse phosphorescente, ou bien par un relais lumineux relié à ladite source lumineuse phosphorescente par des moyens de transmission d'énergie lumineuse réémise par ladite source lumineuse phosphorescente, pour illuminer ledit indicateur, ou bien du côté opposé audit guichet par rapport audit indicateur, ou bien en périphérie dudit guichet, caractérisé en ce que ledit dispositif comporte un cache interposable entre ledit composant lumineux et ledit indicateur entre une position d'occultation où ledit cache s'oppose au passage de la lumière entre ledit composant lumineux et ledit indicateur, et une position d'éclairage où ledit cache ne fait pas entrave au passage de la lumière, et un moyen de commande agencé pour mouvoir ledit cache, et en ce que ledit cache est en matière transflective laissant passer une partie de la lumière ambiante externe audit boîtier pour la recharge en énergie le jour, mais qui rend ledit composant lumineux invisible de nuit.

L'invention concerne encore un appareil horloger ou scientifique, comportant un tel dispositif pour l'illumination d'au moins un indicateur d'affichage que comporte ledit appareil dans un boîtier sous un guichet.

### Description sommaire des dessins

D'autres caractéristiques et avantages de l'invention apparaîtront à la lecture de la description détaillée qui va suivre, en référence aux dessins annexés, où :

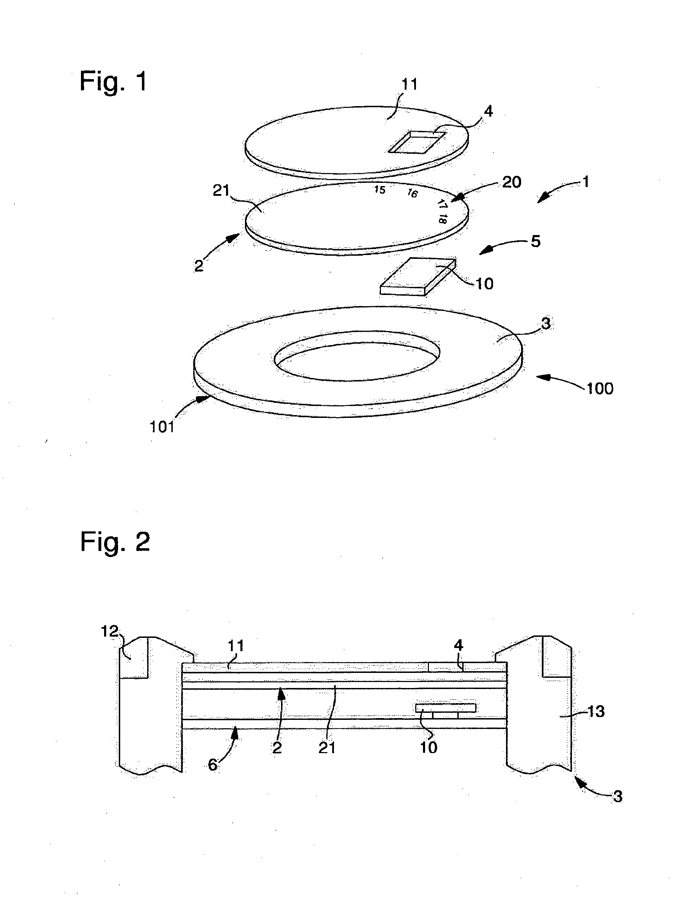

- la figure 1 représente, de façon schématisée et en éclaté, un appareil d'horlogerie, en l'occurrence une montre avec un disque de quantième disposé sous un cadran traversé par un guichet, et une source lumineuse phosphorescente disposée sous le disque de quantième et face au guichet, du côté opposé à ce dernier par rapport au disque ;
- la figure 2 représente, de façon schématisée, partielle et en section transversale, l'appareil de la figure 1 avec des moyens de collecte de lumière en périphérie d'un boîtier avec lunette dans lequel sont logés cadran, disque et source lumineuse ;

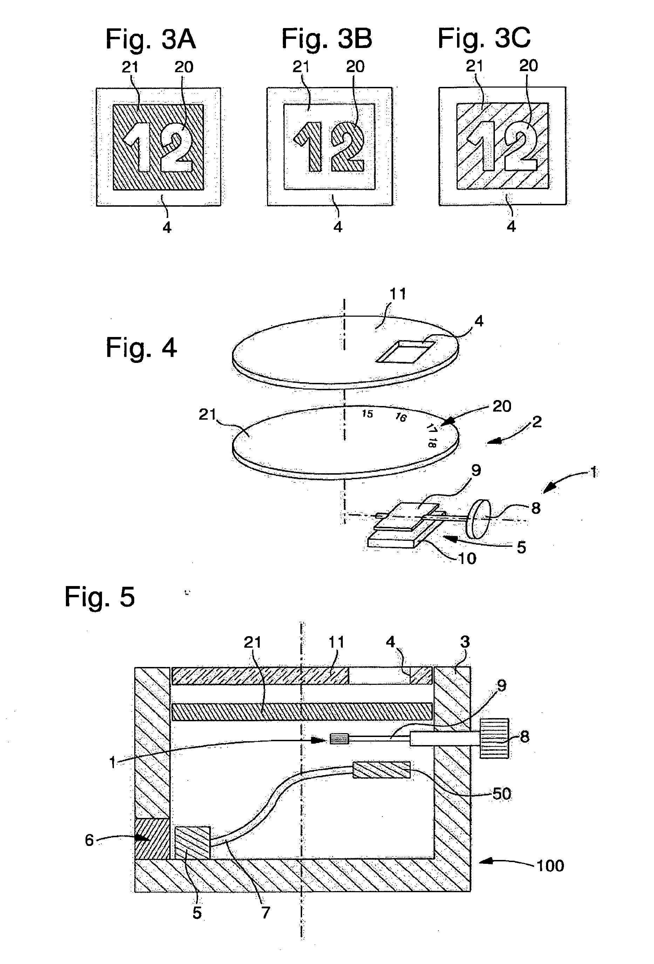

- la figure 3 représente, de façon schématisée et en vue de face, trois variantes de visualisation d'un quantième à travers le guichet du cadran : en figure 3A un disque de quantième opaque avec des éléments d'affichage constitués par des nombres transparents à la lumière, au travers desquels est visible de la lumière réémise par la source lumineuse phosphorescente ; en figure 3B un disque de quantième transparent, au travers duquel est visible de la lumière réémise par la source lumineuse phosphorescente qui est arrêtée par des éléments d'affichage constitués par des nombres opaques à la lumière ; en figure 3C un disque de quantième faisant guide de lumière, comportant des éléments d'affichage constitués par des nombres phosphorescents qui réémettent de la lumière après sa captation et sa diffusion par le disque guide de lumière, avec une intensité lumineuse supérieure à celle visible au travers du disque ;
- la figure 4 représente, de façon similaire à la figure 1, l'appareil muni d'un cache d'occultation de la lumière réémise par la source lumineuse phosphorescente, de façon à assurer un éclairage à la demande.

### Description détaillée des modes de réalisation préférés

Selon l'invention, on loge au moins une source lumineuse dans le volume intérieur d'une boîte de montre, la lumière produite par cette source lumineuse peut s'échapper vers l'extérieur de la boîte de montre par au moins un élément d'habillage de la montre au moins partiellement transparent ou tout du moins translucide. On réalise ainsi une pièce d'horlogerie autorisant la visualisation de certains affichages dans le noir ou l'obscurité.

La lumière produite par cette source passe à travers la partie transparente ou translucide de l'élément d'habillage concerné.

La source lumineuse nécessite un rechargement en énergie. Les configurations usuelles d'alimentation par pile ou batterie, avec rechargement par un organe mobile tel que masse oscillante, ou similaire, ou encore par effet piézo-électrique, ne sont pas décrites ici. La présente description concerne le cas particulier d'une source lumineuse phosphorescente ou/et fluorescente, de préférence phosphorescente en raison de la plus longue durée de rémanence, qui peut atteindre plusieurs heures, et est compatible avec une possibilité d'illumination d'un affichage à tout moment pendant la durée d'une nuit.

On qualifiera, par simplification, de « phosphorescente » la source de lumière dans la suite de l'exposé. Une telle source phosphorescente comporte avantageusement des aluminates de terres rares, bien connues des physiciens, par exemple de l'aluminate de strontium SrAl204 dopé par de l'europium, dont une variété est connue sous le nom de « Super-LumiNova », ou encore des silicates de terres rares, ou un mélange d'aluminates et de silicates de terres rares. D'autres matériaux du négoce tels que le « Lumibrite » conviennent également. Des matériaux comme le tritium 3H, le prométhium 147, ou le radium 226, présentent d'excellentes propriétés phosphorescentes, mais leur forte radioactivité bêta ou/et gamma limite fortement leur emploi, et ils ne peuvent être utilisés qu'en quantités infimes, de préférence en conjugaison avec des aluminates de terres rares, pour certaines applications très particulières, militaires, astronautiques, utilisation aux grandes profondeurs, ou similaire, et avec une protection augmentant notablement le volume de la pièce d'horlogerie, on parle alors de radioluminescence ou d'autoluminescence en cas d'emploi de ces matériaux. On connaît encore des capsules en verre borosilicate contenant des gaz dites « GTLS » de la société « MB Microtech », contenant du tritium 3H, et qui, comme le radium, ne nécessitent aucune excitation externe pour émettre de la lumière, de telles capsules sont utilisées notamment pour la visualisation d'aiguilles ou d'appliques de montres, essentiellement militaires.

La lumière d'excitation provient de l'environnement de l'utilisateur, lumière solaire, lumière ambiante, et l'un des propos de l'invention est d'assurer une transmission suffisante de cette énergie ambiante disponible vers la source de lumière.

La source lumineuse est logée dans le volume intérieur de la boîte de la pièce d'horlogerie ou de la montre. L'énergie ambiante peut être collectée au niveau d'une carrure partiellement ou totalement transparente, ou translucide ou/et au niveau d'un cadran partiellement ou totalement transparent, ou translucide, ou/et encore au niveau d'un guichet d'affichage, notamment pour un quantième ou similaire. L'énergie ambiante peut, encore, être collectée par un accessoire contigu à la pièce d'horlogerie, tel un bracelet de montre, et être transmise par un guide d'onde ou une fibre optique, ou similaire. De la même façon, la captation d'énergie ambiante peut être exécutée au niveau d'autres éléments d'habillage tels que le fond, la lunette, le rehaut, ou autres.

En ce qui concerne l'émission de lumière par la source lumineuse phosphorescente vers l'utilisateur, divers chemins sont envisageables :
- la lumière produite par la source lumineuse phosphorescente éclaire directement des zones transparentes ou translucides d'au moins un composant au travers duquel on souhaite que la lumière sorte. Ce mode de réalisation est applicable lorsqu'aucun obstacle ne vient s'interposer entre la source lumineuse phosphorescente et ce composant à éclairer ;
- le composant à éclairer est réalisé en un matériau, notamment en matière plastique, chargé avec des particules fluorescentes et/ou phosphorescentes, capables d'absorber le rayonnement émis et de réémettre une lumière visible homogène. En fonction du type de particules choisi, fluorescentes et/ou phosphorescentes, l'effet lumineux cesse aussitôt après extinction de la source lumineuse ou au contraire se poursuit par effet de rémanence ;
- la lumière produite par la source lumineuse phosphorescente est injectée dans un guide de lumière qui amène ensuite la lumière au niveau du composant à éclairer. Selon une variante, le guide de lumière est une fibre optique qui permet de contourner les éventuels obstacles qui peuvent se dresser entre la source de lumière phosphorescente et ce composant. Cette fibre optique peut être une fibre optique qui diffuse la lumière injectée sur toute sa longueur.

Pour une application préférée à une montre, l'invention privilégie les trajets de lumière suivants :
- à travers un cadran transparent, ou translucide, ou semi-transparent ;
- à travers des ouvertures dans un cadran, notamment dissimulées dans un contexte décoratif ;
- à travers un guichet d'affichage d'une grandeur, notamment dans un cas particulier un guichet de quantième ;
- à travers une lunette ou une boîte transparente, ou translucide, ou semi-transparente, structurée de manière à collecter l'énergie de la lumière ambiante, et à la concentrer pour l'envoyer sur la source lumineuse phosphorescente, directement ou indirectement à travers un guide de lumière ou une fibre optique ou similaire ;
- à travers un guide de lumière, ou une fibre optique ou similaire, qui collecte et concentre la lumière dans une zone particulière de la pièce d'horlogerie, puis la transporte pour illuminer et charger la source lumineuse phosphorescente.

Le composant à éclairer peut lui-même adopter plusieurs configurations :
- composant opaque avec des éléments d'affichage, tels que chiffres ou caractères ou symboles, transparents ou translucides, ou gravés, ou percés, ou similaire, de façon à laisser la lumière traverser ce composant ;
- composant transparent ou translucide, avec des éléments d'affichage, tels que chiffres ou caractères ou symboles, opaques s'opposant au passage de la lumière ;
- composant transparent ou translucide, avec des éléments d'affichage, tels que chiffres ou caractères ou symboles, phosphorescents, et constituant des guides de lumière, émettant donc eux-mêmes de la lumière vers l'utilisateur ;
- composant opaque, avec des éléments d'affichage, tels que chiffres ou caractères ou symboles, phosphorescents, et constituant des guides de lumière dans l'épaisseur de ce composant entre sa face inférieure et sa face supérieure, émettant donc eux-mêmes de la lumière vers l'utilisateur;
- composant faisant guide de lumière sur lequel des éléments d'affichage, tels que chiffres ou caractères ou symboles, phosphorescents sont apposés. Une structuration de la surface du guide de lumière permet de coupler la lumière ambiante dans son intérieur, de manière à ce que la lumière soit transportée par les éléments d'affichage qui finissent par l'absorber et réémettre de la lumière par phosphorescence ;
- composant opaque éclairé par le pourtour d'un guichet, lequel transmet de la lumière émise par la source lumineuse phosphorescente.

Aux endroits où la lumière ne doit pas passer, le composant concerné peut être opaque dans la masse ou bien être revêtu d'un traitement de surface opaque, tel une peinture ou similaire.

La source lumineuse phosphorescente comporte avantageusement au moins une pastille de matériau adéquat, notamment l'aluminate de strontium SrAl2O4 dopé par de l'europium. Cette au moins une pastille peut prendre différentes formes et positions :
- pastille massive, telle que rondelle ou prisme, disposée sous un indicateur d'affichage, c'est-à-dire du côté opposé à la glace de la pièce d'horlogerie, par rapport à cet indicateur;
- pastille annulaire ou évidée, disposée autour d'un indicateur d'affichage, notamment autour d'un cadran ou autour d'un guichet ;
- pastille massive, telle que rondelle ou prisme, disposée en une zone quelconque de la pièce d'horlogerie, et reliée par un premier guide de lumière ou une fibre optique ou similaire à des moyens de collecte d'énergie ambiante, et par un deuxième guide de lumière, qui peut être confondu avec le premier guide de lumière, lequel deuxième guide étant relié à un relais lumineux de forme ou bien massive, ou bien annulaire ou évidée, ce relais lumineux disposé sous l'indicateur d'affichage à éclairer ou autour de lui.

L'invention est applicable à tous les affichages usuels d'une pièce d'horlogerie ou d'une montre. Afin de ne pas gêner l'utilisateur, elle est toutefois restreinte à l'illumination d'un nombre restreint d'affichages. Selon l'invention, cache, ou volet ou écran peut être interposé sur le trajet de la lumière émise par source lumineuse phosphorescente, par exemple entre cette source et l'indicateur d'affichage à éclairer, ce cache étant éclipsé, ou bien mis en place, par une action mécanique de l'utilisateur, sur un moyen de commande tel qu'un bouton poussoir, une couronne, une lunette tournante, ou similaire. Ce cache peut être réalisé :
- en matériau opaque avec une fonction esthétique en mode jour, et favorisant le contraste dans la lecture des nombres ;
- en matière transflective laissant passer une partie de la lumière ambiante pour la recharge en énergie le jour, mais qui rend la source lumineuse phosphorescente ou son relais invisible de nuit sans action du porteur.

Un exemple de réalisation concerne l'application de l'invention à l'illumination d'un mécanisme de quantième, l'horloger saura l'extrapoler aux autres affichages usuels d'une montre, notamment aux affichages par disques. Un mécanisme d'affichage de quantième comporte généralement un disque dont la périphérie comporte les nombres correspondant aux quantièmes successifs dans le mois. Ce disque est disposé sous le cadran, lui-même disposé sous une glace délimitant la montre du côté de l'utilisateur. Le cadran comporte un guichet, au travers duquel est visible une partie du disque. Pendant le mouvement du disque, les nombres défilent sous le guichet, le mouvement de la montre, ou son mécanisme s'il s'agit d'une montre mécanique, est synchronisé de façon à ce que le nombre apparaissant sous le guichet corresponde à la date du jour. Une source lumineuse phosphorescente, ou un relais lumineux de cette source, est positionnée, ou bien sous le disque de quantième, en correspondance du guichet, ou bien en bordure de ce guichet. En mode jour, la source lumineuse phosphorescente se charge d'énergie lumineuse en absorbant une partie du spectre de la lumière naturelle ou artificielle ambiante. La source lumineuse phosphorescente réémet ensuite graduellement cette énergie sous forme de lumière visible. En mode nuit, dans le noir, l'émission lumineuse de la source lumineuse phosphorescente reste visible plusieurs heures et peut donc être exploitée pour éclairer le quantième. L'emploi d'un cache tel que décrit ci-dessus permet l'illumination du quantième à la demande. En effet, la source lumineuse phosphorescente éclaire en permanence, et ne peut être déconnectée, mais seulement occultée. L'avantage d'éclairer la zone située sous le guichet, ou le pourtour de ce guichet, est que le nouveau quantième apparaissant à minuit est aussi bien éclairé que celui de la veille, ce qui ne serait pas le cas si on se contentait, par exemple, d'utiliser un disque de quantième avec des nombres phosphorescents, car en pareil cas seul le quantième de la veille recevrait l'énergie de charge, et non celui du lendemain.

Tel que visible sur les figures, l'invention concerne ainsi un dispositif 1 d'illumination d'au moins un indicateur d'affichage 2 d'un appareil 100 horloger ou scientifique. Les figures illustrent, de façon non limitative, l'invention avec un indicateur 2 qui est un disque ou un anneau de quantième, qui est alors le composant à éclairer. Cet indicateur 2 est incorporé dans un boîtier 3 sous un guichet 4. Selon l'invention le dispositif 1 comporte au moins une source lumineuse phosphorescente 5 dans le boîtier 3, des moyens de collecte 6 d'énergie lumineuse externe du milieu ambiant du boîtier 3 vers la source lumineuse phosphorescente 5.

Un composant lumineux 10 est constitué, ou bien par la source lumineuse phosphorescente 5, ou bien par un relais lumineux 50 relié à la source lumineuse phosphorescente 5 par des moyens de transmission 7 d'énergie lumineuse réémise par la source lumineuse phosphorescente 5. Ce composant lumineux 10 est implanté, pour illuminer l'indicateur 2, ou bien du côté opposé au guichet 4 par rapport à l'indicateur 2, ou bien en périphérie du guichet 4, notamment par diffusion dans l'épaisseur de ce dernier.

Sur la variante illustrée par les figures, le composant lumineux 10 est implanté, pour illuminer l'indicateur 2, du côté opposé au guichet 3 par rapport à l'indicateur 2.

Sur la figure 3A, l'indicateur 2 est un composant opaque avec des éléments d'affichage 20 transparents ou translucides laissant la lumière traverser l'indicateur 2.

Sur la figure 3B l'indicateur 2 est un composant transparent ou translucide, avec des éléments d'affichage 20 opaques s'opposant au passage de la lumière. Sur la figure 3C, l'indicateur 2 est un composant faisant guide-collecteur de lumière, comportant des éléments d'affichage 20 constitués par des nombres phosphorescents, par exemple imprimés avec de la matière phosphorescente. Ces éléments d'affichage 20 absorbent la lumière collectée par l'indicateur 2 guide de lumière, et la réémettent par phosphorescence, avec une intensité lumineuse supérieure à celle visible au travers du disque 2. Seul l'élément d'affichage 20 qui défile sous le guichet 4 est visible.

Dans une variante non illustrée sur les figures, le composant lumineux 10 est implanté en périphérie du guichet 4, et l'indicateur 2 est un composant opaque éclairé par le pourtour du guichet 4, lequel constitue un tel relais lumineux 50 qui transmet de la lumière émise par la source lumineuse phosphorescente 5.

Selon l'invention, pour un éclairage à la demande, le dispositif 1 comporte des moyens d'occultation ; à cet effet, tel que visible sur la figure 4, il comporte un moyen de commande 8, par exemple un poussoir, agencé pour mouvoir un cache 9 interposable entre le composant lumineux 10 et l'indicateur 2 entre une position d'occultation où le cache 9 s'oppose au passage de la lumière entre le composant lumineux 10 et l'indicateur 2, et une position d'éclairage où le cache 9 ne fait pas entrave au passage de la lumière.

Dans une première variante, ce cache 9 est en matériau opaque avec une fonction esthétique en mode jour, et favorisant le contraste dans la lecture de l'indicateur 2.

Dans une autre variante, le cache 9 est en matière transflective laissant passer une partie de la lumière ambiante externe au boîtier 3 pour la recharge en énergie le jour, mais qui rend le composant lumineux 10 invisible de nuit.

Concernant les moyens de collecte 6 d'énergie lumineuse externe du milieu ambiant du boîtier 3 vers ladite source lumineuse phosphorescente 5, ils collectent avantageusement la lumière à travers un cadran 11 transparent, ou translucide, ou semi-transparent que comporte le boîtier 3, et le guichet 4 est ménagé dans ce cadran 11 ou autour de ce cadran 11.

Les moyens de collecte 6 peuvent aussi collecter la lumière à travers des ouvertures dans un tel cadran 11 transparent, ou translucide, ou semi-transparent que comporte le boîtier 3, et le guichet 4 est ménagé dans ce cadran 11 ou autour de ce cadran 11.

Les moyens de collecte 6 peuvent encore collecter la lumière à travers un tel guichet 4.

Dans une autre variante, les moyens de collecte 6 collectent la lumière à travers une lunette 12 ou une boîte 13 transparente, ou translucide, ou semi-transparente, que comporte le boîtier 3, structurée de manière à collecter l'énergie de la lumière ambiante, et à la concentrer pour l'envoyer sur la source lumineuse phosphorescente 5, directement ou indirectement à travers un guide de lumière ou une fibre optique.

Dans une autre variante encore, les moyens de collecte 6 collectent la lumière à travers un guide de lumière ou une fibre optique, qui collecte et concentre la lumière dans une zone particulière du boîtier 3, puis la transporte pour illuminer et charger la source lumineuse phosphorescente 5.

Dans cette application particulière illustrée par les figures, l'indicateur 2 est un disque de quantième d'horlogerie.

L'invention concerne encore un appareil 100 horloger ou scientifique, comportant un tel dispositif 1 d'illumination d'au moins un indicateur d'affichage 2 que comporte cet appareil 100 dans un boîtier 3 sous un guichet 4.

Dans l'application illustrée, cet appareil 100 est constitué par une montre 101 dont un indicateur d'affichage 2 est un disque de quantième 21.

L'avantage de l'invention est de ne nécessiter aucune alimentation électrique. L'invention peut être intégrée aussi bien dans une montre mécanique que dans une montre électronique, ou encore dans un appareil scientifique, tel qu'une boussole, ou un compteur, ou encore dans un matériel militaire, tel qu'appareil de pointage d'artillerie ou similaire, ou dans un matériel d'aviation par exemple pour l'affichage d'une pression de référence, d'un cap ou d'une fréquence.

L'invention est, encore, applicable à un rétro-éclairage d'écrans de téléphones ou d'afficheurs électroniques similaires.

## Revendications

1. Dispositif (1) d'illumination d'au moins un indicateur d'affichage (2) d'un appareil (100) horloger ou scientifique, ledit indicateur (2) étant incorporé dans un boîtier (3) que comporte ledit dispositif (1) sous un guichet (4) que comporte également ledit dispositif (1), ledit dispositif (1) comportant au moins une source lumineuse phosphorescente (5) dans ledit boîtier (3), des moyens de collecte (6) d'énergie lumineuse externe du milieu ambiant dudit boîtier (3) vers ladite source lumineuse phosphorescente (5), et dans lequel dispositif (1) est implanté un composant lumineux (10) constitué, ou bien par ladite source lumineuse phosphorescente (5), ou bien par un relais lumineux (50) relié à ladite source lumineuse phosphorescente (5) par des moyens de transmission (7) d'énergie lumineuse réémise par ladite source lumineuse phosphorescente (5), pour illuminer ledit indicateur (2), ou bien du côté opposé audit guichet (4) par rapport audit indicateur (2), ou bien en périphérie dudit guichet (4), **caractérisé en ce que** ledit dispositif (1) comporte un cache (9) interposable entre ledit composant lumineux (10) et ledit indicateur (2) entre une position d'occultation où ledit cache (9) s'oppose au passage de la lumière entre ledit composant lumineux (10) et ledit indicateur (2), et une position d'éclairage où ledit cache (9) ne fait pas entrave au passage de la lumière, et un moyen de commande (8) agencé pour mouvoir ledit cache (9), et **en ce que** ledit cache (9) est en matériau opaque avec une fonction esthétique en mode jour, et favorisant le contraste dans la lecture dudit indicateur (2).

2. Dispositif (1) d'illumination d'au moins un indicateur d'affichage (2) d'un appareil (100) horloger ou scientifique, ledit indicateur (2) étant incorporé dans un boîtier (3) que comporte ledit dispositif (1) sous un guichet (4) que comporte également ledit dispositif (1), ledit dispositif (1) comportant au moins une source lumineuse phosphorescente (5) dans ledit boîtier (3), des moyens de collecte (6) d'énergie lumineuse externe du milieu ambiant dudit boîtier (3) vers ladite source lumineuse phosphorescente (5), et dans lequel dispositif (1) est implanté un composant lumineux (10) constitué, ou bien par ladite source lumineuse phosphorescente (5), ou bien par un relais lumineux (50) relié à ladite source lumineuse phosphorescente (5) par des moyens de transmission (7) d'énergie lumineuse réémise par ladite source lumineuse phosphorescente (5), pour illuminer ledit indicateur (2), ou bien du côté opposé audit guichet (4) par rapport audit indicateur (2), ou bien en périphérie dudit guichet (4), **caractérisé en ce que** ledit dispositif (1) comporte un cache (9) interposable entre ledit composant lumineux (10) et ledit indicateur (2) entre une position d'occultation où ledit cache (9) s'oppose au passage de la lumière entre ledit composant lumineux (10) et ledit indicateur (2), et une position d'éclairage où ledit cache (9) ne fait pas entrave au passage de la lumière, et un moyen de commande (8) agencé pour mouvoir ledit cache (9), et **en ce que** ledit cache (9) est en matière transflective laissant passer une partie de la lumière ambiante externe audit boîtier (3) pour la recharge en énergie le jour, mais qui rend ledit composant lumineux (10) invisible de nuit.

3. Dispositif (1) selon l'une des revendications précédentes, **caractérisé en ce que** ledit composant lumineux (10) est implanté, pour illuminer ledit indicateur (2), du côté opposé audit guichet (3) par rapport audit indicateur (2).

4. Dispositif (1) selon l'une des revendications précédentes, **caractérisé en ce que** ledit indicateur (2) est un composant opaque avec des éléments d'affichage (20) transparents ou translucides laissant la lumière traverser ledit indicateur (2).

5. Dispositif (1) selon l'une des revendications 1 à 3, **caractérisé en ce que** ledit indicateur (2) est un composant transparent ou translucide, avec des éléments d'affichage (20) opaques s'opposant au passage de la lumière.

6. Dispositif (1) selon l'une des revendications 1 à 3, **caractérisé en ce que** ledit indicateur (2) est un guide-collecteur de lumière, avec des éléments d'affichage (20) phosphorescents qui absorbent de la lumière collectée par ledit indicateur (2) et réémettant de la lumière par phosphorescence vers l'utilisateur au travers dudit guichet (4).

7. Dispositif (1) selon l'une des revendications 1 ou 2, **caractérisé en ce que** ledit composant lumineux (10) est implanté en périphérie dudit guichet (4), et **en ce que** ledit indicateur (2) est un composant opaque éclairé par le pourtour dudit guichet (4), lequel constitue un dit relais lumineux (50) qui transmet de la lumière émise par ladite source lumineuse phosphorescente (5).

8. Dispositif (1) selon l'une des revendications précédentes, **caractérisé en ce que** lesdits moyens de collecte (6) d'énergie lumineuse externe du milieu ambiant dudit boîtier (3) vers ladite source lumineuse phosphorescente (5) collectent la lumière à travers un cadran (11) transparent, ou translucide, ou semi-transparent que comporte ledit boîtier (3), et **en ce que** ledit guichet (4) est ménagé dans ledit cadran (11) ou autour dudit cadran (11).

9. Dispositif (1) selon l'une des revendications précédentes, **caractérisé en ce que** lesdits moyens de collecte (6) collectent la lumière à travers des ouvertures dans un cadran (11) transparent, ou translucide, ou semi-transparent que comporte ledit boîtier (3), et **en ce que** ledit guichet (4) est ménagé dans ledit cadran (11) ou autour dudit cadran (11).

10. Dispositif (1) selon l'une des revendications précédentes, **caractérisé en ce que** lesdits moyens de collecte (6) collectent la lumière à travers un dit guichet (4).

11. Dispositif (1) selon l'une des revendications précédentes, **caractérisé en ce que** lesdits moyens de collecte (6) collectent la lumière à travers une lunette (12) ou une boîte (13) transparente, ou translucide, ou semi-transparente, que comporte ledit boîtier (3), structurée de manière à collecter l'énergie de la lumière ambiante, et à la concentrer pour l'envoyer sur ladite source lumineuse phosphorescente (5), directement ou indirectement à travers un guide de lumière ou une fibre optique.

12. Dispositif (1) selon l'une des revendications précédentes, **caractérisé en ce que** lesdits moyens de collecte (6) collectent la lumière à travers un guide de lumière ou une fibre optique, qui collecte et concentre la lumière dans une zone particulière dudit boîtier (3), puis la transporte pour illuminer et charger ladite source lumineuse phosphorescente (5).

13. Dispositif (1) selon l'une des revendications précédentes, **caractérisé en ce que** ledit indicateur (2) est un disque de quantième d'horlogerie.

14. Appareil (100) horloger ou scientifique, comportant un dispositif (1) selon l'une des revendications précédentes pour l'illumination d'au moins un indicateur d'affichage (2) que comporte ledit appareil (100) dans un boîtier (3) sous un guichet (4).

15. Appareil (100) selon la revendication précédente, **caractérisé en ce qu'**il est constitué par une montre (101) dont un dit indicateur d'affichage (2) est un disque de quantième (21).

## Patentansprüche

1. Vorrichtung (1) zur Beleuchtung wenigstens eines Anzeigers (2) eines zeitmesstechnischen oder wissenschaftlichen Geräts (100), wobei der Anzeiger (2) in ein zur Vorrichtung (1) gehöriges Gehäuse (3) unter einem ebenfalls zur Vorrichtung (1) gehörigen Fensterchen (4) eingebaut ist, welche Vorrichtung (1) wenigstens eine phosphoreszierende Lichtquelle (5) im Gehäuse (3) und Mittel (6) zum Sammeln von äusserer Lichtenergie des Umgebungsmilieus des Gehäuses (3) in Richtung auf die phosphoreszierende Lichtquelle (5) umfasst, und in welche Vorrichtung (1) ein Leuchtbauteil (10) eingesetzt ist, das entweder von der phosphoreszierenden Lichtquelle (5) oder von einem Lichtrelais (50), das mit der phosphoreszierenden Lichtquelle (5) durch Mittel (7) zum Übertragen von Lichtenergie, die von der phosphoreszierenden Lichtquelle (5) wiederausgestrahlt wird, verbunden ist, gebildet ist, um den Anzeiger (2) entweder auf der Seite, die dem Fensterchen (4) im Vergleich zum Anzeiger (2) entgegengesetzt ist, oder an der Peripherie des Fensterchens (4) zu beleuchten, **dadurch gekennzeichnet, dass** die Vorrichtung (1) eine Abdeckung (9), die zwischen das Leuchtbauteil (10) und den Anzeiger (2) zwischen einer Verdeckungsposition, wo die Abdeckung (9) dem Durchgang des Lichts zwischen dem Leuchtbauteil (10) und dem Anzeiger (2) entgegensteht, und einer Beleuchtungsposition, wo die Abdeckung (9) den Durchgang des Lichts nicht behindert, eingefügt werden kann, und ein Steuermittel (8) umfasst, das vorgesehen ist, um die Abdeckung (9) zu bewegen, und **dadurch gekennzeichnet, dass** die Abdeckung (9) aus lichtundurchlässigem Werkstoff besteht, der im Tagesmodus eine ästhetische Funktion hat und den Kontrast beim Ablesen des Anzeigers (2) begünstigt.

2. Vorrichtung (1) zur Beleuchtung wenigstens eines Anzeigers (2) eines zeitmesstechnischen oder wissenschaftlichen Geräts (100), wobei der Anzeiger (2) in ein zur Vorrichtung (1) gehöriges Gehäuse (3) unter einem ebenfalls zur Vorrichtung (1) gehörigen Fensterchen (4) eingebaut ist, welche Vorrichtung (1) wenigstens eine phosphoreszierende Lichtquelle (5) im Gehäuse (3) und Mittel (6) zum Sammeln von äusserer Lichtenergie des Umgebungsmilieus des Gehäuses (3) in Richtung auf die phosphoreszierende Lichtquelle (5) umfasst, und in welche Vorrichtung (1) ein Leuchtbauteil (10) eingesetzt ist, das entweder von der phosphoreszierenden Lichtquelle (5) oder von einem Lichtrelais (50), das mit der phosphoreszierenden Lichtquelle (5) durch Mittel (7) zum Übertragen von Lichtenergie, die von der phosphoreszierenden Lichtquelle (5) wiederausgestrahlt wird, verbunden ist, gebildet ist, um den Anzeiger (2) entweder auf der Seite, die dem Fensterchen (4) im Vergleich zum Anzeiger (2) entgegengesetzt ist, oder an der Peripherie des Fensterchens (4) zu beleuchten, **dadurch gekennzeichnet, dass** die Vorrichtung (1) eine Abdeckung (9), die zwischen das Leuchtbauteil (10) und den Anzeiger (2) zwischen einer Verdeckungsposition, wo die Abdeckung (9) dem Durchgang des Lichts zwischen dem Leuchtbauteil (10) und dem Anzeiger (2) entgegensteht, und einer Beleuchtungsposition, wo die Abdeckung (9) den Durchgang des Lichts nicht behindert, eingefügt werden kann, und ein Steuermittel (8) umfasst, das vorgesehen ist, um die Abdeckung (9) zu bewegen, und **dadurch gekennzeichnet, dass** die Abdeckung (9) aus transflektivem Werkstoff besteht, der tagsüber einen Teil des ausserhalb des Gehäuses (3) vorhandenen Umgebungslichts für die Energienachladung durchgehen lässt, aber nachts das Leuchtbauteil (10) unsichtbar macht.

3. Vorrichtung (1) nach einem der vorhergehenden Ansprüche, **dadurch gekennzeichnet, dass** das Leuchtbauteil (10) eingefügt ist, um den Anzeiger (2) auf der Seite, die dem Fensterchen (4) im Vergleich zum Anzeiger (2) entgegengesetzt ist, zu beleuchten.

4. Vorrichtung (1) nach einem der vorhergehenden Ansprüche, **dadurch gekennzeichnet, dass** der Anzeiger (2) ein lichtundurchlässiges Bauteil mit transparenten oder lichtdurchlässigen Anzeigeelementen (20) ist, die das Licht durch den Anzeiger (2) durchgehen lassen.

5. Vorrichtung (1) nach einem der Ansprüche 1 bis 3, **dadurch gekennzeichnet, dass** der Anzeiger (2) ein transparentes oder lichtdurchlässiges Bauteil mit lichtundurchlässigen Anzeigeelementen (20) ist, die dem Durchgang des Lichts entgegenstehen.

6. Vorrichtung (1) nach einem der Ansprüche 1 bis 3, **dadurch gekennzeichnet, dass** der Anzeiger (2) ein Licht-Leiter/Sammler mit phosphoreszierenden Anzeigeelementen (20) ist, die vom Anzeiger (2) gesammeltes Licht absorbieren und Licht durch Phosphoreszenz zum Benutzer durch das Fensterchen (4) hindurch wiederausstrahlen.

7. Vorrichtung (1) nach einem der Ansprüche 1 oder 2, **dadurch gekennzeichnet, dass** das Leuchtbauteil (10) an der Peripherie des Fensterchens (4) eingefügt ist, und dass der Anzeiger (2) ein lichtundurchlässiges Bauteil ist, das vom Rand des Fensterchens (4) beleuchtet wird, das ein sogenanntes Lichtrelais (50) bildet, das von der phosphoreszierenden Lichtquelle (5) ausgestrahltes Licht überträgt.

8. Vorrichtung (1) nach einem der vorhergehenden Ansprüche, **dadurch gekennzeichnet, dass** die Mittel (6) zum Sammeln von äusserer Lichtenergie des Umgebungsmilieus des Gehäuses (3) in Richtung auf die phosphoreszierende Lichtquelle (5) Licht durch ein in das Gehäuse (3) eingegliedertes transparentes oder lichtdurchlässiges oder halbtransparentes Zifferblatt (11) hindurch sammeln, und dass das Fensterchen (4) im Zifferblatt (11) oder um dieses Zifferblatt (11) ausgebildet ist.

9. Vorrichtung (1) nach einem der vorhergehenden Ansprüche, **dadurch gekennzeichnet, dass** die Sammelmittel (6) Licht durch Öffnungen in einem in das Gehäuse (3) eingegliederten transparenten oder lichtdurchlässigen oder halbtransparenten Zifferblatt (11) sammeln, und dass das Fensterchen (4) im Zifferblatt (11) oder um dieses Zifferblatt (11) ausgebildet ist.

10. Vorrichtung (1) nach einem der vorhergehenden Ansprüche, **dadurch gekennzeichnet, dass** die Sammelmittel (6) Licht durch ein Fensterchen (4) hindurch sammeln.

11. Vorrichtung (1) nach einem der vorhergehenden Ansprüche, **dadurch gekennzeichnet, dass** die Sammelmittel (6) Licht durch einen Glasreif (12) oder ein in das Gehäuse (3) eingegliedertes transparentes oder lichtdurchlässiges oder halbtransparentes Gehäuse (13) sammeln, das derart strukturiert ist, dass es die Energie des Umgebungslichts sammelt und sie konzentriert, um sie direkt oder indirekt durch einen Lichtleiter oder eine Lichtleitfaser auf die phosphoreszierende Lichtquelle (5) zu übertragen.

12. Vorrichtung (1) nach einem der vorhergehenden Ansprüche, **dadurch gekennzeichnet, dass** die Sammelmittel (6) Licht durch einen Lichtleiter oder eine Lichtleitfaser sammeln, die das Licht in einem besonderen Bereich des Gehäuses (3) sammelt und konzentriert und es dann weiterleitet, um die phosphoreszierende Lichtquelle (5) zu beleuchten und aufzuladen.

13. Vorrichtung (1) nach einem der vorhergehenden Ansprüche, **dadurch gekennzeichnet, dass** der Anzeiger (2) eine Uhrendatumscheibe ist.

14. Zeitmesstechnisches oder wissenschaftliches Gerät (100), das eine Vorrichtung (1) nach einem der vorhergehenden Ansprüche für die Beleuchtung wenigstens eines Anzeigers (2) umfasst, den das Gerät (100) in einem Gehäuse (3) unter einem Fensterchen (4) umfasst.

15. Gerät (100) nach vorhergehendem Anspruch, **dadurch gekennzeichnet, dass** es aus einer Uhr (101) besteht, bei der ein Anzeiger (2) eine Datumscheibe (21) ist.

## Claims

1. Device (1) for illumination of at least one display indicator (2) of a timepiece or scientific apparatus (100), said indicator (2) being incorporated in a case (3) comprised in said device (1) under an aperture (4) also comprised in said device (1), said device (1) including at least one phosphorescent light source (5) in said case (3), means (6) for collecting external light energy from the ambient medium of said case (3) towards said phosphorescent light source (5), and in said device (1) is arranged a light component (10), formed either by said phosphorescent light source (5), or by a light relay (50) connected to said phosphorescent light source (5) by means (7) for transmission of the light energy re-transmitted by said phosphorescent light source (5), to illuminate said indicator (2), either on the side opposite to said aperture (4) with respect to said indicator (2), or at the periphery of said aperture (4), **characterized in that** said device (1) includes a cover (9) that can be inserted between said light component (10) and said indicator (2) between a blanking position where said cover (9) blocks the passage of light between said light component (10) and said indicator (2), and a lighting position where said cover (9) does not obstruct the passage of light and a control means (8) arranged to move said cover (9), and **in that** said cover (9) is made of opaque material with an aesthetic function in day mode, and enhancing contrast in the reading of said indicator (2).

2. Device for illumination of at least one display indicator (2) of a timepiece or scientific apparatus (100), said indicator (2) being incorporated in a case (3) comprised in said device (1) under an aperture (4) also comprised in said device (1), said device (1) including at least one phosphorescent light source (5) in said case (3), means for collecting external light energy from the ambient medium of said case (3) towards said phosphorescent light source (5), and in said device (1) is arranged a light component (10), formed either by said phosphorescent light source (5), or by a light relay (50) connected to said phosphorescent light source (5) by means (7) for transmission of the light energy re-transmitted by said phosphorescent light source (5), to illuminate said indicator (2), either on the side opposite to said aperture (4) with respect to said indicator (2), or at the periphery of said aperture (4), **characterized in that** said device (1) includes a cover (9) that can be inserted between said light component (10) and said indicator (2) between a blanking position where said cover (9) blocks the passage of light between said light component (10) and said indicator (2), and a lighting position where said cover (9) does not obstruct the passage of light and a control means (8) arranged to move said cover (9), and **in that** said cover (9) is made of transflective material which allows part of the ambient light external to said case (3) to pass through for energy recharging in the day, but which makes said light component (10) invisible at night.

3. Device (1) according to any of the preceding claims, **characterized in that** said light component (10) is arranged, to illuminate said indicator (2), on the side opposite to said aperture (4?) with respect to said indicator (2).

4. Device (1) according to any of the preceding claims, **characterized in that** said indicator (2) is an opaque component with transparent or translucent display elements (20) allowing light to pass through said indicator (2).

5. Device (1) according to any of claims 1 to 3, **characterized in that** said indicator (2) is a transparent or translucent component, with opaque display elements (20) blocking the passage of light.

6. Device (1) according to any of claims 1 to 3, **characterized in that** said indicator (2) is a light guide-collector, with phosphorescent display elements (20) which absorb the light collected by said indicator (2) and retransmit light by phosphorescence towards to the user through said aperture (4).

7. Device (1) according to any of claims 1 or 2, **characterized in that** said light component (10) is arranged at the periphery of said aperture (4), and **in that** said indicator (2) is an opaque element illuminated by the periphery of said aperture (4), which forms a said light relay (50), which transmits the light emitted by said phosphorescent light source (5).

8. Device (1) according to any of the preceding claims, **characterized in that** said means (6) of collecting external light energy from the ambient medium of said case (3) towards said phosphorescent light source (5) collect light through a transparent or translucent or semi-transparent dial (11) comprised in said case (3), and **in that** said aperture (4) is arranged in said dial (11) or around said dial (11).

9. Device according to any of the preceding claims, **characterized in that** said collection means (6) collect light through openings in a transparent, or translucent or semi-transparent dial (11) comprised in said case (3), and **in that** said aperture (4) is arranged in said dial (11) or around said dial (11),

10. Device (1) according to any of the preceding claims, **characterized in that** said collection means (6) collect light through a said aperture (4).

11. Device (1) according to any of the preceding claims, **characterized in that** said collection means (6) collect light through a bezel (12) or a transparent, or translucent or semi-transparent case (13), structured to collect the ambient light energy, and to concentrate and then send said energy across said phosphorescent light source (5) directly or indirectly through a light guide or an optical fibre.

12. Device (1) according to any of the preceding claims, **characterized in that** said collection means (6) collect light through a light guide or an optical fibre, which collects and concentrates light in a particular area of said case (3), then transports the light to illuminate and charge said phosphorescent light source (5).

13. Device (1) according to any of the preceding claims, **characterized in that** said indicator (2) is a timepiece date disc.

14. Timepiece or scientific apparatus (100), including a device (1) according to any of the preceding claims for illumination of at least one display indicator (2) comprised in said apparatus (100) in a case (3) under an aperture (4).

15. Apparatus (100) according to the preceding claim, **characterized in that** the apparatus is formed by a watch (101) wherein one said display indicator (2) is a date disc (21).
